# EUROPÄISCHE PATENTSCHRIFT

(11) **EP 2 268 515 B1**
(45) Veröffentlichungstag und Bekanntmachung des Hinweises auf die Patenterteilung: **13.01.2016**
(21) Anmeldenummer: 09733598.8
(22) Anmeldetag: 24.02.2009
(51) Int. Cl.: B60T 8/17, B60T 8/1755

(54) **VERFAHREN UND VORRICHTUNG ZUR STABILITÄTSREGELUNG EINES NUTZFAHRZEUGES**
METHOD AND DEVICE FOR CONTROLLING THE STABILITY OF AN UTILITY VEHICLE
PROCÉDÉ ET DISPOSITIF DE RÉGULATION DE LA STABILITÉ D' UN VÉHICULE UTILITAIRE

(30) Priorität: 17.04.2008 DE 102008019194
(43) Veröffentlichungstag der Anmeldung: 05.01.2011
(73) Patentinhaber: WABCO GmbH, 30453 Hannover (DE)
(72) Erfinder: REICH, Thomas, 30459 Hannover (DE)
(74) Vertreter: Lauerwald, Jörg
(86) Internationale Anmeldenummer: PCT/EP2009/001279
(87) Internationale Veröffentlichungsnummer: WO 2009/127291

(56) Entgegenhaltungen:
- DE-A1- 10 157 976
- DE-A1- 19 802 041
- DE-A1- 19 907 633

## Beschreibung

Die Erfindung betrifft ein Verfahren und eine Vorrichtung zur Stabilitätsregelung eines Nutzfahrzeuges.

Stabilitätsregelsysteme von Fahrzeugen dienen dazu, in kritischen Situationen des Fahrzeugs" wie z.B. einem Untersteuern, Übersteuern oder einer Kippneigung, durch unter anderem Bremseingriffe, insbesondere eine Bremsdruckmodulation, unterstützend in die Führung des Fahrzeugs einzugreifen.

Als Eingangsgrößen werden hierbei Messsignale unterschiedlicher Sensoren, insbesondere eines Gierratensensors, Lenkradwinkelsensors und Querbeschleunigungssensors sowie gegebenenfalls eines Längsbeschleunigungssensors verwendet; ergänzend werden zum Teil von weiteren Bremsregelsystemen wie ABS oder EBS ermittelte Fahrzustandsgrößen wie z.B. die Fahrzeugmasse und eine Referenzgeschwindigkeit herangezogen.

Die DE1980241A1 offenbart ein Verfahren und eine Vorrichtung zur Umkippvermeidung eines Fahrzeuges. Hierzu wird in Abhängigkeit einer Größe, die beschreibt, ob für das Fahrzeug eine Kipptendenz um eine in Längsrichtung des Fahrzeugs orientierte Fahrzeugachse vorliegt, und die wenigstens in Abhängigkeit eines Vergleichs, der in Abhängigkeit einer die Querdynamik des Fahrzeugs beschreibenden Größe und eines charakteristischen Wertes, der wiederum in Abhängigkeit einer Größe ermittelt wird, die die momentanen Reibverhältnisse beschreibt, durchgeführt wird, eine Strategie zur Stabilisierung des Fahrzeugs aus wenigstens zwei unterschiedlichen Strategien auswählt.

Die DE19907633A1 offenbart ein Verfahren, zur Umkippvermeidung eines Fahrzeugs um eine in Längsrichtung orientierte Fahrzeugachse. Hierzu wird eine die Querdynamik des Fahrzeugs beschreibende Größe ermittelt. Diese Größe wird mit wenigstens einem Schwellwert für die Größe verglichen. Für den Fall, bei dem die die Querdynamik des Fahrzeugs beschreibende Größe größer als der oder gleich dem Schwellwert ist, wird die Geschwindigkeit des Fahrzeugs wenigstens durch Bremseneingriffe an wenigstens einem Rad und durch Motoreingriffe und durch Retardereingriffe auf einen vorgebbaren Geschwindigkeitswert reduziert oder auf einem vorgebbaren Geschwindigkeitswert gehalten.

Insbesondere in Nutzfahrzeugen werden Stabilitätsregelsysteme eingesetzt, die einen Regelkreis für eine Gierregelung und einen weiteren Regelkreis für eine Kippschutzregelung aufweisen. Die Kippschutzregelung nimmt im Allgemeinen Eingangssignale der Querbeschleunigung, der ermittelten Fahrzeugmasse sowie der Fahrzeugreferenzgeschwindigkeit und gegebenenfalls ein Lenkradwinkelsignal auf. Die Gierregelung nimmt im Allgemeinen das Lenkradwinkelsignal, die Fahrzeugreferenzgeschwindigkeit und das Gierratensignal auf.

Durch die umfangreiche Sensorik entstehen entsprechende Kosten sowohl für die Hardware der eingesetzen Sensoren als auch die Software-Implementierung. Weiterhin sind die Sensoren, insbesondere der Gierratensensor, fehlertechnisch anfällig, so dass ein hoher Softwareentwicklungsaufwand für eine sichere Implementierung erforderlich ist.

Weiterhin erfordern die individuellen Regelkanäle entsprechende Kosten für das Bremssystem, wobei die Gierregelung zwei individuelle Regelkanäle für die Vorderachse erfordert.

Der Erfindung liegt die Aufgabe zugrunde, ein Verfahren und eine Vorrichtung zur Stabilitätsregelung eines Fahrzeuges zuschaffen, die mit relativ geringem Aufwand eine sichere Fahrstabilitätsregelung ermöglichen.

Diese Aufgabe wird durch ein Verfahren nach Anspruch 1 und eine Vorrichtung nach Anspruch 13 gelöst. Die Unteransprüche beschreiben bevorzugte Weiterbildungen.

Der Erfindung liegt der Gedanke zugrunde, das Ist-Gierverhalten aus der gemessenen Querbeschleunigung abzuschätzen und das Soll- Gierverhalten aus dem Lenkradwinkelsignal zu ermitteln, und die so gewonnenen Ist- und Soll- Werte des Gierverhaltens miteinander zu vergleichen. Anders als bei herkömmlichen Systemen wird erfindungsgemäß somit für die Gierregelung kein spezieller Gierratensensor zur Ausgabe eines Gierraten- Messsignals verwendet.

Dem liegt die erfindungsgemäße Erkenntnis zugrunde, dass für die Kippschutzregelung bzw. Rollstabilitätsregelung ohnehin ein Querbeschleunigungssignal verwendet wird und dieses Querbeschleunigungssignal grundsätzlich auch zur Begrenzung der Untersteuerneigung bei der Gierregelung ohne ein zusätzliches Gierratensignal bzw. Gierraten- Messsignal verwendet werden kann. Anders als bei bestehenden Kippschutzregelungen wird hierbei nicht auf den Lenkradwinkelsensor verzichtet, sondern dieser bewusst nicht nur in die Kippschutzregelung, sondern auch in die Gierregelung einbezogen. Somit ergibt sich gegenüber bekannten Kippschutzregelsystemen bzw. Rollstabilitätsregelsystemen ohne Lenkradwinkelsensor eine höhere Leistungsfähigkeit, insbesondere bei dynamischen Manövern.

Das erfindungsgemäße Verfahren und die erfindungsgemäße Vorrichtung sind insbesondere bei Fahrzeugen mit großem Radstand, z.B. Lkws und Bussen, hilfreich, da diese auf Niedrigreibwerten bei Instabilität eher zum Untersteuem neigen. Hierbei wird erfindungsgemäß erkannt, dass bei derartigen Fahrzeugen ein Untersteuereingriff durch Einbremsen der kurveninneren Hinterräder sehr effektiv ist, ein Übersteuereingriff durch Einbremsen des kurvenäußeren Vorderrades hingegen weniger effektiv. Bei Zugsystemen ist das erfindungsgemäße Verfahren insbesondere für das Zugfahrzeug relevant.

Die Kippschutzregelung kann insbesondere an sämtlichen Rädern des Zug- und Anhängerfahrzeugs durchgeführt werden.

Erfindungsgemäß kann somit durch Wegfall des hardwaremäßig und softwaremäßig sehr kostspieligen und auch fehlerträchtigen Gierratensensors und eine Einbeziehung des Lenkradwinkelsignals und Querbeschleunigungssignals sowohl für die Kippschutzregelung als auch für die Gierregelung ein kostengünstiges und dennoch sehr sicheres, robustes System geschaffen werden.

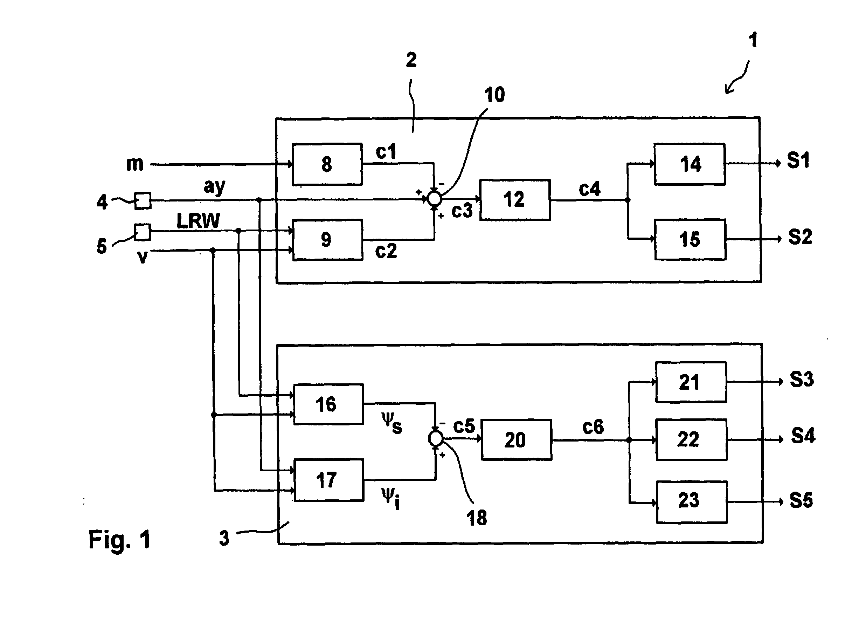

Die Erfindung wird im Folgenden anhand der beiliegenden Zeichnung an einer Ausführungsform erläutert. Fig. 1 zeigt ein Blockdiagramm eines erfindungsgemäßen Stabilitätsregelsystems.

Bei dem in Fig. 1 gezeigten Stabilitätsregelsystem 1 sind ein Kippschutzregelsystem 2 und ein Gierregelsystem 3 als zwei Regelsysteme mit gemeinsamen Eingangssignalen vorgesehen. Die Regelsysteme 2 und 3 können hierbei softwaremäßig in einem gemeinsamen Steuergerät oder zwei hardwaremäßig getrennten Steuergeräten ausgebildet sein.

Das Kippschutzregelsystem 2 nimmt als Eingangssignal ein Fahrzeugmassesignal m auf, das von einem unterlagerten Bremssystem, z.B. einer ABS- oder EBS-Steuerung, in an sich bekannter Weise als Referenzwert aus der Trägheit bei Einwirkung unterschiedlicher Beschleunigungen bzw. Bremseinwirkungen ermittelt wird, gegebenenfalls unter Einbeziehung von Achslastsensoren. Weiterhin nimmt das Kippschutzregelsystem 2 ein Fahrzeug-Geschwindigkeitssignal v auf, dass z.B. in den Bremssystemen des ABS- oder EBS als Referenzgeschwindigkeit vorliegt und insbesondere aus den von Raddrehzahlsensoren ermittelten Raddrehzahlen ermittelt wird und für die ergänzend durchgeführten Schlupfregelsysteme und gegebenenfalls Bremskraftverteilungssysteme grundlegend ist. Als Fahrzeug-Geschwindigkeitssignal v kann alternativ hierzu auch ein Mess-Signal von einer Radachse genommen werden. Weiterhin nimmt das Kippschutzregelsystem 2 ein Querbeschleunigungssignal ay von einem Querbeschleunigungssensor 4 des Fahrzeuges und ein Lenkradwinkelsignal LRW von einem Lenkradwinkelsensor 5 des Fahrzeuges auf. In dem Kippschutzregelungssystem 2 erfolgt in Block 8 eine Abschätzung der Kippgrenze aus dem Fahrzeugmassesignal m und Ausgabe eines Kippgrenzen- Abschätzsignals c1.

Weiterhin erfolgt in Block 9 eine Abschätzung der Kippdynamik aus dem Lenkradwinkelsignal LRW und dem Fahrzeug-Geschwindigkeitssignal v; der eingeschlagene Lenkradwinkel und die Fahrzeuggeschwindigkeit ermöglichen hierbei eine Abschätzung der Veränderung der Querbeschleunigung und Ausgabe eines Kippdynamik-Abschätzsignals c2. Die Abschätzung der Kippdynamik in Block 9 umfasst gemäß dieser Ausführungsform nicht die Einbeziehung der Querbeschleunigung bzw. des Querbeschleunigungssignals ay, sondern lediglich die aus dem Lenkradwinkel LRW und der Fahrzeuggeschwindigkeit v zu erwartende dynamische Änderung. Hierbei ermöglichen der ermittelte Lenkradwinkel und die Fahrzeuggeschwindigkeit eine hinreichend genaue Abschätzung der zu erwartenden Kippdynamik, um nachfolgend in einer Vergleichseinrichtung 10 die Signale c1 und c2 aufzunehmen und die im Block 8 ermittelte oder abgeschätzte Kippgrenze mit der in Block 9 abgeschätzten Kippdynamik zu vergleichen, wobei vorteilhafterweise in diesen Vergleich ergänzend das Querbeschleunigungssignal ay eingeht.

Die Vergleichseinrichtung 10 vergleicht somit die aus der Querbeschleunigung und der Kippdynamik zu erwartenden Kippwinkel oder Kippmomente mit der abgeschätzten Kippgrenze, wie in Fig. 1 durch die Plus- und Minus-Angaben angezeigt, und gibt das durch den Vergleich erzeugte Kippschutz-Vergleichssignal c3, das die Kippgefahr bzw. Kippwahrscheinlichkeit wiedergibt, an einen Kippschutzregler 12, der daraufhin den Umfang einer Kippschutzregelung ermittelt und diese initiiert durch Ausgabe eines Regelsignals c4 an einen Verzögerungsregler 14 zur Verzögerungsregelung durch Bremseinwirkung an einer oder mehreren Achsen und/oder an einen Regler 15 für das Motormoment zur Einstellung einer Motorbremswirkung, die wiederum Steuersignale S1, S2 an die jeweiligen Stelleinrichtungen ausgeben. Der Umfang der Ansteuerung der Regler 14 oder 15 erfolgt je nach erforderlichem Eingriff, wie es z.B. auch bei der Ansteuerung der Fahrzeugbremsen oder einer Motorbremse bei einer Bremsregelung in Längsrichtung bekannt ist. Erfindungsgemäß kann der Verzögerungsregler 14 auf ein oder mehrere Bremsen des Zugfahrzeuges und Anhängerfahrzeuges einwirken, vorzugsweise wirkt er auf sämtliche Bremsen des Zugfahrzeuges und Anhängerfahrzeuges bzw. Trailers ein.

Das Gierregelsystem 3 weist eine Einrichtung 16 zur Bestimmung eines Giersollwertes auf, die das Lenkradwinkelsignal LRW und das Fahrzeuggeschwindigkeitssignal v aufnimmt und hieraus den vom Fahrer eingegebenen Giersollwert ermittelt und als Giersollwert-Signal ψs ausgibt. Bei dieser Ermittlung kann insbesondere eine Fahrt auf einer Kreisbahn mit dem Lenkradwinkeleinschlag und der Fahrzeuggeschwindigkeit angesetzt werden, der eine bestimmte Gierrate zugeordnet wird. Weiterhin ist eine Einrichtung 17 zur Abschätzung eines Gieristwertes, d.h. der tatsächlichen Gierrate des Fahrzeugs um seine Hochachse, vorgesehen, die das Querbeschleunigungssignal ay und das Fahrzeuggeschwindigkeitssignal v aufnimmt und ein Gieristwert-Signal ψi ausgibt. Das Gierregelsystem 3 bestimmt somit vorteilhafterweise primär das Gierverhalten des Zugfahrzeugs.

Die Abschätzung in der Einrichtung 17 kann insbesondere durch Bildung eines Verhältnisses bzw. Quotienten des Querbeschleunigungssignals ay und des Fahrzeuggeschwindigkeitssignals y, d.h. als ay/v erfolgen. Dem liegt der erfindungsgemäße Gedanke zugrunde, dass bei einer Kurvenfahrt die Gierrate bzw. der Gieristwert ψi des Schwerpunkts des Zugfahrzeugs durch diesen Quotienten ay/v gebildet wird und dieser Wert in den Fällen, in denen keine seitliche Schleuderbewegung vorliegt, d.h. bei gewünschter Kurvenfahrt oder auch bei Untersteuern, herangezogen werden kann. Somit kann er für eine Regelung bei Untersteuem des Zugfahrzeugs herangezogen werden; eine Verwendung bei einer Übersteuerneigung oder Übersteuern, bei dem grundsätzlich eine Schleuderbewegung mit ausbrechendem Heck und Bug erfolgen kann und somit die Gierrate des Zugfahrzeugs nicht mehr mit der Gierrate seines Schwerpunktes übereinstimmt, wird daher erfindungsgemäß als nicht so vorteilhaft erkannt und gemäß dieser Ausführungsform nicht durchgeführt.

Das Giersollwert-Signal ψs und das Gieristwert-Signal ψi werden nachfolgend an eine Vergleichseinrichtung 18 ausgegeben, die diese Werte miteinander vergleicht. Hierbei wird vorteilhafterweise ermittelt, ob die Differenz zwischen dem Sollwert und dem Istwert einen vorgegebenen Schwellwert überschreitet. Die Vergleichseinrichtung 18 gibt ein Vergleichssignal c5 an einen Gierregler 20, der nachfolgend mit einem Regelsignal c6 einen Regler 21 für das Motormoment und/oder einen Regler 22 für eine seitenweise Bremsschlupfregelung und/oder einen Bremsregler 23 des Anhängers ansteuert, die jeweils Steuersignale S3, S4, S5 an entsprechende Stelleinrichtungen ausgeben. Somit erfolgt hier eine Ansteuerung des Reglers für das Motormoment und/oder der Bremse entsprechend wie im obigen Kippschutzregelungssystem 2. Grundsätzlich können die Einrichtungen 15 und 21 auch als gemeinsamer Motormomentregler ausgebildet sein, der somit je nach festgestellter Instabilität vom Kippschutzregler 12 oder Gierregler 20 angesteuert wird.

Die Einrichtungen 8 bis 23 der Fig. 1 sind vorteilhafterweise rein softwaremäßig ausgebildet, so dass eine Implementierung als Programm in einer oder mehreren bestehenden Steuereinrichtungen möglich ist.

## Patentansprüche

1. Verfahren zur Stabilitätsregelung eines Nutzfahrzeugs, bei dem ein Kippschutzregelverfahren durchgeführt wird, bei dem zumindest ein Querbeschleunigungssignal (ay), ein Lenkradwinkelsignal (LRW) und ein FahrzeugGeschwindigkeitssignal (v) aufgenommen und hieraus Steuersignale (S1, S2) für Fahrzeugeingriffe gebildet und ausgegeben werden, und ein Gierregelungsverfahren durchgeführt wird, bei dem das Lenkradwinkelsignal (LRW), das Querbeschleunigungssignal (ay) und das Fahrzeug-Geschwindigkeitssignal (v) aufgenommen werden, ein Gierraten-Sollwertsignal (ψs) und ein Gierraten-Istwertsignal (ψi) ermittelt und miteinander verglichen werden und eine Gierregelung durchgeführt wird, bei der Steuersignale (S3, S4, S5) für Fahrzeugeingriffe gebildet und ausgegeben werden, wobei das Gierraten-Istwertsignal (ψi) ohne Verwendung eines Gierratensensors oder eines Gierraten-Messsignals aus zumindest dem Querbeschleunigungssignal (ay) und dem Fahrzeug- Geschwindigkeitssignal (v) ermittelt, insbesondere abgeschätzt wird, und wobei ein Gierraten-Sollwertsignal (ψs) und das Gierraten-Istwertsignal (ψi) verglichen werden und in Abhängigkeit des Vergleichs ein Gierregler (20) angesteuert wird, **dadurch gekennzeichnet, dass**
das Gierraten-Sollwertsignal (ψs) aus dem Lenkradwinkelsignal (LRW) und dem Fahrzeug-Geschwindigkeitssignal (v) ermittelt wird und
das Gierregelungsverfahren nur bei Erkennen eines Untersteuerns des Nutzfahrzeugs oder einer Untersteuerneigung des Nutzfahrzeugs durchgeführt wird.

2. Verfahren nach Anspruch 1, **dadurch gekennzeichnet, dass** das Nutzfahrzeug ein Zugfahrzeug ist.

3. Verfahren nach Anspruch 2, **dadurch gekennzeichnet, dass** das Zugfahrzeug Bestandteil eines Zugsystems mit mindestens einem Anhängerfahrzeug ist.

4. Verfahren nach Anspruch 1, 2 oder 3, **dadurch gekennzeichnet, dass** das Gierraten-Istwertsignal (ψi) aus einem Verhältnis der Querbeschleunigungl (ay) und der Fahrzeuggeschwindigkeit (v) abgeschätzt wird.

5. Verfahren nach Anspruch 1, 2, 3 oder 4, **dadurch gekennzeichnet, dass** der Gierregler (20) einen Regler (21) für ein Motormoment und/oder mindestens einen Bremsregler (22, 23) ansteuert.

6. Verfahren nach Anspruch 5, **dadurch gekennzeichnet, dass** der Bremsregler (22, 23) ein seitenweiser Bremsschlupfregler (22), vorzugsweise der Hinterachse des Zugfahrzeugs, und/oder ein Bremsregler (23) eines Anhängers ist.

7. Verfahren nach einem der Ansprüche 2 bis 6, **dadurch gekennzeichnet, dass** bei Erkennen des Untersteuerns oder der Untersteuerneigung des Zugfahrzeugs das kurveninnere Rad einer Hinterachse oder beider Hinterachsen abgebremst wird.

8. Verfahren nach einem der vorherigen Ansprüche, **dadurch gekennzeichnet, dass** bei dem Kippschutzregelverfahren ergänzend ein Fahrzeugmassesignal (m) aufgenommen wird, aus dem Fahrzeugmassesignal (m) eine Kippgrenze des Fahrzeugs abgeschätzt wird, und in einer nachfolgenden Vergleichseinrichtung (10) aus zumindest der abgeschätzten Kippgrenze und einer aus dem Lenkradwinkelsignal (LRW) und dem Fahrzeug-Geschwindigkeitssignal (v) abgeschätzten Kippdynamik ein Kippzustand und/oder eine Kippgefahr und/oder eine Kippwahrscheinlichkeit ermittelt wird.

9. Verfahren nach Anspruch 8, **dadurch gekennzeichnet, dass** als Fahrzeug-Geschwindigkeitssignal (v) ein Referenzwert eines Steuerungssystems, vorzugsweise eines Bremsregelungssystems (ABS, EBS), verwendet wird.

10. Verfahren nach Anspruch 8 oder 9, **dadurch gekennzeichnet, dass** bei dem Vergleich der abgeschätzten Kippgrenze mit der abgeschätzten Kippdynamik ergänzend das Querbeschleunigungssignal (ay) aufgenommen wird, und aus dem Ergebnis des Vergleichs ein Kippschutzregler (12) angesteuert wird.

11. Verfahren nach Anspruch 10, **dadurch gekennzeichnet, dass** der Kippschutzregler (12) einen Verzögerungsregler (14) für eine oder mehrere Bremse, vorzugsweise sämtliche Bremsen des Zugfahrzeuges und des Anhängerfahrzeuges ansteuert.

12. Verfahren nach Anspruch 10 oder 11, **dadurch gekennzeichnet, dass** der Kippschutzregler (12) einen Regler (15) für ein Motormoment ansteuert.

13. Vorrichtung zur Stabilitätsregelung eines Nutzfahrzeuges, die aufweist:
ein Kippschutzregelungssystem (2), das zumindest ein Querbeschleunigungssignal (ay) von einem Querbeschleunigungssensor (4), ein Lenkradwinkelsignal (LRW) von einem Lenkradwinkelsensor (5) und ein Fahrzeug-Geschwindigkeitssignal (v) aufnimmt und hieraus Steuersignale (S1, S2) für Fahrzeugeingriffe bildet und ausgibt, und ein Gierregelungssystem (3), das das Querbeschleunigungssignal (ay), das Lenkradwinkelsignal (LRW) und das Fahrzeug- Geschwindigkeitssignal (v) aufnimmt, ein Gierraten-Sollwertsignal (ψs) und ein Gierraten-Istwertsignal (ψi) ermittelt und miteinander vergleicht, eine Gierregelung durchführt und Steuersignale (S3, S4, S5) für Fahrzeugeingriffe ausgibt, wobei das Gierregelungssystem (3) ohne Einbeziehung eines Gierratensensors oder eines Gierraten- Messsignals ausgebildet ist und wobei das Gierregelungssystem (3) aufweist:
eine Einrichtung (16) zur Ermittlung eines Gierraten-Sollwertsignals (ψs), eine Einrichtung (17) zur Ermittlung eines Gierraten-Istwertsignals (ψi), die zumindest das Querbeschleunigungssignal (ay) und das Fahrzeug-Geschwindigkeitssignal (v) aufnimmt, und
eine Vergleichseinrichtung (18), die das Gierraten-Sollwertsignal (ψs) und das Gierraten-Istwertsignal (ψi) aufnimmt und miteinander vergleicht und ein Gierregler (20), der ein Ausgabesignal (c5) der Vergleichseinrichtung (18) aufnimmt, **dadurch gekennzeichnet, dass**
die Einrichtung (16) zur Ermittlung eines Gierraten-Sollwertsignals (ψs) zumindest das Lenkradwinkelsignal (LRW) und das Fahrzeug-Geschwindigkeitssignal (v) aufnimmt und
das Gierregelungssystem (3) die Gierregelung nur bei Erkennen eines Untersteuerns oder einer Untersteuerneigung des Nutzfahrzeugs durchführt.

14. Vorrichtung nach Anspruch 13, **dadurch gekennzeichnet, dass** Nutzfahrzeug ein Zugfahrzeug ist.

15. Vorrichtung nach Anspruch 14, **dadurch gekennzeichnet, dass** das Zugfahrzeug Bestandteil eines Zugsystems mit mindestens einem Anhängerfahrzeug ist.

16. Vorrichtung nach Anspruch 13, 14 oder 15, **dadurch gekennzeichnet, dass** Einrichtung (17) zur Ermittlung des Gierraten-Istwertsignals (ψi) das Gierraten-Istwertsignal (ψi) aus einem Verhältnis der Querbeschleunigung (ay) und der Fahrzeuggeschwindigkeit (v) abschätzt.

17. Vorrichtung nach Anspruch 13, 14, 15 oder 16, **dadurch gekennzeichnet, dass** der Gierregler (20) einen Regler (21) für ein Motormoment und/oder mindestens einen Regler (22, 23) für einen Bremseingriff ansteuert.

18. Vorrichtung nach Anspruch 17, **dadurch gekennzeichnet, dass** der Gierregler (20) einen Regler (22) für eine seitenweise Bremsschlupfregelung, vorzugsweise der Hinterachse des Zugfahrzeugs, und/oder einen Bremsregler (23) eines Anhängers ansteuert.

19. Vorrichtung nach Anspruch 18, **dadurch gekennzeichnet, dass** bei Erkennen des Untersteuerns oder der Untersteuerneigung des Zugfahrzeugs der Gierregler (20) den Regler (22) zum Abbremsen des kurveninneren Rades einer Hinterachse oder beider Hinterachsen ansteuert.

20. Vorrichtung nach einem der Ansprüche 13 bis 19, **dadurch gekennzeichnet, dass** das Kippschutzregelungssystem (2) ein Fahrzeugmassesignal (m) aufnimmt, z. B. von einem weiteren Bremsregelsystem (ABS, EBS), insbesondere einem Bremsschlupfregelsystem.

21. Vorrichtung nach einem der Ansprüche 13 bis 20, **dadurch gekennzeichnet, dass** das Kippschutzregelungssystem (2) aufweist:
eine Einrichtung (8) zur Abschätzung einer Kippgrenze, die ein Fahrzeugmassesignal (m) aufnimmt,
eine Einrichtung (9) zur Abschätzung einer Kippdynamik, die das Lenkradwinkelsignal (LRW) und das Fahrzeug-Geschwindigkeitssignal (v) aufnimmt,
eine Vergleichseinrichtung (10) zur Aufnahme der Ausgangssignale (c1, c2) der Einrichtung (8) zur Abschätzung einer Kippgrenze und der Einrichtung (9) zur Abschätzung einer Kippdynamik, zur Aufnahme des Querbeschleunigungssignals (ay) und zur Ausgabe eines Kippschutz-Vergleichssignals (c3),
einen Kippschutzregler (12) zur Aufnahme des Kippschutz- Vergleichssignals (c3) und Ansteuerung eines Verzögerungsreglers (14) für Bremsen und/oder zur Ansteuerung eines Reglers (15) für ein Motormoment.

22. Vorrichtung nach Anspruch 21, **dadurch gekennzeichnet, dass** der Verzögerungsregler (14) ein Regler für eine oder mehrere Bremsen, vorzugsweise sämtliche Bremsen des Zugfahrzeuges und des Anhängerfahrzeuges ist.

## Claims

1. Method for controlling the stability of a utility vehicle, in which an anti-tilt control method is carried out in which at least one lateral acceleration signal (ay), one steering wheel angle signal (LRW) and one vehicle speed signal (v) are received and control signals (S1, S2) for vehicle interventions are formed therefrom and output, and a yaw control method is carried out during which the steering wheel angle signal (LRW), the lateral acceleration signal (ay) and the vehicle speed signal (v) are received, a yaw rate setpoint value signal (ψs) and a yaw rate actual value signal (ψi) are determined and compared with one another, and a yaw control process is carried out during which control signals (S3, S4, S5) for vehicle interventions are formed and output, wherein the yaw rate actual value signal (ψi) is determined, in particular estimated, from at least the lateral acceleration signal (ay) and the vehicle speed signal (v) without using a yaw rate sensor or a yaw rate measurement signal, and wherein a yaw rate setpoint value signal (ψs) and the yaw rate actual value signal (ψi) are compared and a yaw controller (20) is actuated as a function of the comparison,
**characterized in that**
the yaw rate setpoint value signal (ψs) is determined from the steering wheel angle signal (LRW) and the vehicle speed signal (v) and
the yaw control method is carried out only when understeering of the utility vehicle or an inclination of the utility vehicle to understeer is detected.

2. Method according to Claim 1, **characterized in that** the utility vehicle is a traction vehicle.

3. Method according to Claim 2, **characterized in that** the traction vehicle is a component of a train system with at least one trailer vehicle.

4. Method according to Claim 1, 2 or 3, **characterized in that** the yaw rate actual value signal (ψi) is estimated from a ratio between the lateral acceleration (ay) and the vehicle speed (v).

5. Method according to Claim 1, 2, 3 or 4, **characterized in that** the yaw controller (20) actuates a controller (21) for an engine torque and/or at least one brake controller (22, 23).

6. Method according to Claim 5, **characterized in that** the brake controller (22, 23) is a brake slip controller (22), preferably of the rear axle of the traction vehicle, which acts per side of the vehicle, and/or a brake controller (23) of a trailer.

7. Method according to one of Claims 2 to 6, **characterized in that**, when understeering of the traction vehicle or an inclination of the traction vehicle to understeer is detected, the wheel on a rear axle or on both rear axles which is on the inside of a bend is braked.

8. Method according to one of the preceding claims, **characterized in that**, in the anti-tilt control method, a vehicle mass signal (m) is additionally received, a tilting limit of the vehicle is estimated from the vehicle mass signal (m), and in a downstream comparison device (10) a tilting state and/or a risk of tilting and/or a probability of tilting are determined from at least the estimated tilting limit and tilting dynamics which are estimated from the steering wheel angle signal (LRW) and the vehicle speed signal (v).

9. Method according to Claim 8, **characterized in that** a reference value of a control system, preferably of a brake control system (ABS, EBS) is used as a vehicle speed signal (v).

10. Method according to Claim 8 or 9, **characterized in that**, during the comparison of the estimated tilting limit with the estimated tilting dynamics, the lateral acceleration signal (ay) is additionally received, and an anti-tilt controller (12) is actuated on the basis of the result of the comparison.

11. Method according to Claim 10, **characterized in that** the anti-tilt controller (12) actuates a deceleration controller (14) for one or more brakes, preferably all the brakes, of the traction vehicle and of the trailer vehicle.

12. Method according to Claim 10 or 11, **characterized in that** the anti-tilt controller (12) actuates a controller (15) for an engine torque.

13. Device for controlling the stability of a utility vehicle, which has:
an anti-tilt control system (2), which receives at least one lateral acceleration signal (ay) from a lateral acceleration sensor (4), a steering wheel angle signal (LRW) from a steering wheel angle sensor (5) and a vehicle speed signal (v) and forms control signals (S1, S2) for vehicle interventions therefrom and outputs said control signals, and a yaw control system (3) which receives the lateral acceleration signal (ay), the steering wheel angle signal (LRW) and the vehicle speed signal (v), determines a yaw rate setpoint value signal (ψs) and a yaw rate actual value signal (ψi) and compares them with one another, carries out a yaw control process, and outputs control signals (S3, S4, S5) for vehicle interventions, wherein the yaw control system (3) is embodied without including a yaw rate sensor or a yaw rate measurement signal and wherein the yaw control system (3) has:
a device (16) for determining a yaw rate setpoint value signal (ψs),
a device (17) for determining a yaw rate actual value signal (ψi), which device (17) receives at least the lateral acceleration signal (ay) and the vehicle speed signal (v), and
a comparison device (18) which receives the yaw rate setpoint value signal (ψs) and the yaw rate actual value signal (ψi) and compares them with one another, and a yaw controller (20) which receives an output signal (c5) of the comparison device (18), **characterized in that** the device (16) for determining a yaw rate setpoint value signal (ψs) receives at least the steering wheel angle signal (LRW) and the vehicle speed signal (v), and
the yaw control system (3) carries out the yaw rate control only when understeering of the traction vehicle or a tendency of the traction vehicle to understeer is detected.

14. Device according to Claim 13, **characterized in that** the utility vehicle is a traction vehicle.

15. Device according to Claim 14, **characterized in that** the traction vehicle is a component of a traction system with at least one trailer vehicle.

16. Device according to Claim 13, 14 or 15, **characterized in that** the device (17) for determining the yaw rate actual value signal (ψi) estimates the yaw rate actual value signal (ψi) from a ratio between the lateral acceleration (ay) and the vehicle speed (v).

17. Device according to Claim 13, 14, 15 or 16, **characterized in that** the yaw controller (20) actuates a controller (21) for an engine torque and/or at least one controller (22, 23) for a braking intervention.

18. Device according to Claim 17, **characterized in that** the yaw controller (20) actuates a controller (22) for brake slip control per side, preferably of the rear axle of the traction vehicle, and/or a brake controller (23) of a trailer.

19. Device according to Claim 18, **characterized in that**, when understeering or the tendency of the traction vehicle to understeer is detected, the yaw controller (20) actuates the controller (22) in order to brake the wheel on the inside of a bend of a rear axle or of both rear axles.

20. Device according to one of Claims 13 to 19, **characterized in that** the anti-tilt control system (2) receives a vehicle mass signal (m), for example from a further brake control system (ABS, EBS), in particular a brake slip control system.

21. Device according to one of Claims 13 to 20, **characterized in that** the anti-tilt control system (2) has:
a device (8) for estimating a tilting limit, which device (8) receives a vehicle mass signal (m),
a device (9) for estimating tilting dynamics,
which device (9) receives the steering wheel angle signal (LRW) and the vehicle speed signal (v),
a comparison device (10) for receiving the output signals (c1, c2) of the device (8) for estimating a tilting limit and the device (9) for estimating tilting dynamics, for receiving the lateral acceleration signal (ay) and for outputting an anti-tilt comparison signal (c3),
an anti-tilt controller (12) for receiving the anti-tilt comparison signal (c3) and actuating a deceleration controller (14) for brakes and/or for actuating a controller (15) for an engine torque.

22. Device according to Claim 21, **characterized in that** the deceleration controller (14) is a controller for one or more brakes, preferably all the brakes, of the traction vehicle and of the trailer vehicle.

## Revendications

1. Procédé de régulation de la stabilité d'un véhicule utilitaire, dans lequel un procédé de réglage de la protection contre le basculement est mis en oeuvre, dans lequel au moins un signal d'accélération transversale (ay), un signal d'angle du volant de direction (LRW) et un signal de vitesse du véhicule (v) sont reçus et des signaux de commande (S1, S2) pour des interventions sur le véhicule sont créés et émis à partir de ceux-ci, et dans lequel un procédé de régulation de lacet est mis en oeuvre, dans lequel le signal d'angle du volant de direction (LRW), le signal d'accélération transversale (ay) et le signal de vitesse du véhicule (v) sont reçus, un signal de valeur de consigne de vitesse de lacet (Ψs) et un signal de valeur réelle de vitesse de lacet (Ψi) sont déterminés et comparés l'un à l'autre, et une régulation de lacet est effectuée, dans laquelle des signaux de commande (S3, S4, S5) pour des interventions sur le véhicule sont formés et émis, le signal de valeur réelle de vitesse de lacet (Ψi) étant déterminé, notamment estimé, sans utiliser de capteur de vitesse de lacet ou de signal de mesure de vitesse de lacet à partir d'au moins le signal d'accélération transversale (ay) et le signal de vitesse du véhicule (v), et un signal de valeur de consigne de vitesse de lacet (Ψs) et le signal de valeur réelle de vitesse de lacet (Ψi) étant comparés et un régulateur de lacet (20) étant commandé en fonction de la comparaison,
**caractérisé en ce que**
le signal de valeur de consigne de vitesse de lacet (Ψs) est déterminé à partir du signal d'angle du volant de direction (LRW) et du signal de vitesse du véhicule (v) et le procédé de régulation de lacet n'étant mis en oeuvre qu'à la reconnaissance d'un sous-virage du véhicule utilitaire ou d'une tendance au sous-virage du véhicule utilitaire.

2. Procédé selon la revendication 1, **caractérisé en ce que** le véhicule utilitaire est un véhicule tracteur.

3. Procédé selon la revendication 2, **caractérisé en ce que** le véhicule utilitaire fait partie d'un système de traction ayant au moins un véhicule remorque.

4. Procédé selon la revendication 1, 2 ou 3, **caractérisé en ce que** le signal de valeur réelle de vitesse de lacet (Ψi) est estimé à partir d'un rapport de l'accélération transversale (ay) et de la vitesse du véhicule (v).

5. Procédé selon la revendication 1, 2, 3 ou 4, **caractérisé en ce que** le régulateur de lacet (20) commande un régulateur (21) pour un couple moteur et/ou au moins un régulateur de freinage (22, 23).

6. Procédé selon la revendication 5, **caractérisé en ce que** le régulateur de freinage (22, 23) est un régulateur de patinage des freins latéral (22), de préférence de l'essieu arrière du véhicule tracteur, et/ou un régulateur de freinage (23) d'une remorque.

7. Procédé selon l'une quelconque des revendications 2 à 6, **caractérisé en ce qu'**à la reconnaissance d'un sous-virage ou de la tendance au sous-virage du véhicule tracteur, la roue intérieure au virage d'un essieu arrière ou des deux essieux arrière est freinée.

8. Procédé selon l'une quelconque des revendications précédentes, **caractérisé en ce que** dans le procédé de réglage de la protection contre le basculement, en complément, un signal de masse du véhicule (m) est reçu, une limite de basculement du véhicule est estimée à partir du signal de masse du véhicule (m), et dans un dispositif de comparaison suivant (10), à partir d'au moins la limite de basculement estimée et d'une dynamique de basculement estimée à partir du signal d'angle du volant de direction (LRW) et du signal de vitesse du véhicule (v), un état de basculement et/ou un risque de basculement et/ou une probabilité de basculement sont déterminés.

9. Procédé selon la revendication 8, **caractérisé en ce que** l'on utilise en tant que signal de vitesse du véhicule (v) une valeur de référence d'un système de commande, de préférence d'un système de régulation de freinage (ABS, EBS).

10. Procédé selon la revendication 8 ou 9, **caractérisé en ce que** lors de la comparaison de la limite de basculement estimée avec la dynamique de basculement estimée, le signal d'accélération transversale (ay) est reçu, et un régulateur de protection contre le basculement (12) est commandé à partir du résultat de la comparaison.

11. Procédé selon la revendication 10, **caractérisé en ce que** le régulateur de protection contre le basculement (12) commande un régulateur de décélération (14) pour un ou plusieurs freins, de préférence pour tous les freins du véhicule tracteur et du véhicule remorque.

12. Procédé selon la revendication 10 ou 11, **caractérisé en ce que** le régulateur de protection contre le basculement (12) commande un régulateur (15) pour un couple moteur.

13. Dispositif de régulation de la stabilité d'un véhicule utilitaire, qui comprend : un système de régulation de protection contre le basculement (2), qui reçoit au moins un signal d'accélération transversale (ay) d'un capteur d'accélération transversale (4), un signal d'angle du volant de direction (LRW) d'un capteur d'angle de volant de direction (5) et un signal de vitesse du véhicule (v) et forme et émet, à partir de ceux-ci, des signaux de commande (S1, S2) pour des interventions sur le véhicule, et un système de régulation de lacet (3) qui reçoit le signal d'accélération transversale (ay), le signal d'angle de volant de direction (LRW) et le signal de vitesse du véhicule (v), qui détermine un signal de valeur de consigne de vitesse de lacet (Ψs) et un signal de valeur réelle de vitesse de lacet (Ψi) et les compare l'un avec l'autre, effectue une régulation de lacet et émet des signaux de commande (S3, S4, S5) pour des interventions sur le véhicule, le système de régulation de lacet (3) étant réalisé sans incorporer de capteur de vitesse de lacet ni de signal de mesure de vitesse de lacet, et le système de régulation de lacet (3) présentant :
un dispositif (16) pour déterminer un signal de valeur de consigne de vitesse de lacet (Ψs), un dispositif (17) pour déterminer un signal de valeur réelle de vitesse de lacet (Ψi), qui reçoit au moins le signal d'accélération transversale (ay) et le signal de vitesse du véhicule (v), et
un dispositif de comparaison (18) qui reçoit le signal de valeur de consigne de vitesse de lacet (Ψs) et le signal de valeur réelle de vitesse de lacet (Ψi) et les compare l'un avec l'autre et un régulateur de lacet (20), qui reçoit un signal émis (c5) du dispositif de comparaison (18),
**caractérisé en ce que**
le dispositif (16) pour déterminer un signal de valeur de consigne de vitesse de lacet (Ψs) reçoit au moins le signal d'angle du volant de direction (LRW) et le signal de vitesse du véhicule (v) et
le système de régulation de lacet (3) effectue la régulation de lacet uniquement à la reconnaissance d'un sous-virage ou d'une tendance au sous-virage du véhicule utilitaire.

14. Dispositif selon la revendication 13, **caractérisé en ce que** le véhicule utilitaire est un véhicule tracteur.

15. Dispositif selon la revendication 14, **caractérisé en ce que** le véhicule tracteur fait partie d'un système de traction ayant au moins un véhicule remorque.

16. Dispositif selon la revendication 13, 14 ou 15, **caractérisé en ce que** le dispositif (17) pour déterminer le signal de valeur réelle de vitesse de lacet (Ψi) estime le signal de valeur réelle de vitesse de lacet (Ψi) à partir d'un rapport de l'accélération transversale (ay) et de la vitesse du véhicule (v).

17. Dispositif selon la revendication 13, 14, 15 ou 16, **caractérisé en ce que** le régulateur de lacet (20) commande un régulateur (21) pour un couple moteur et/ou au moins un régulateur (22, 23) pour une intervention de freinage.

18. Dispositif selon la revendication 17, **caractérisé en ce que** le régulateur de lacet (20) commande un régulateur (22) pour une régulation du patinage des freins latérale, de préférence de l'essieu arrière du véhicule tracteur, et/ou un régulateur de freinage (23) d'une remorque.

19. Dispositif selon la revendication 18, **caractérisé en ce qu'**à la reconnaissance du sous-virage ou de la tendance au sous-virage du véhicule tracteur, le régulateur de lacet (20) commande le régulateur (22) à freiner la roue intérieure au virage d'un essieu arrière ou des deux essieux arrière.

20. Dispositif selon l'une quelconque des revendications 13 à 19, **caractérisé en ce que** le système de régulation de protection contre le basculement (2) reçoit un signal de masse de véhicule (m), par exemple depuis un autre système de régulation de freinage (ABS, EBS), en particulier un système de réglage d'antipatinage des freins.

21. Dispositif selon l'une quelconque des revendications 13 à 20, **caractérisé en ce que** le système de régulation de protection contre le basculement (2) présente :
un dispositif (8) pour estimer une limite de basculement qui reçoit un signal de masse de véhicule (m),
un dispositif (9) pour estimer une dynamique de basculement qui reçoit le signal d'angle de volant de direction (LRW) et le signal de vitesse de véhicule (v), un dispositif de comparaison (10) pour recevoir les signaux de sortie (c1, c2) du dispositif (8) pour estimer une limite de basculement et du dispositif (9) pour estimer une dynamique de basculement, pour recevoir le signal d'accélération transversale (ay) et pour émettre un signal de comparaison de protection contre le basculement (c3), un régulateur de protection contre le basculement (12) pour recevoir le signal de comparaison de protection contre le basculement (c3) et pour commander un régulateur de décélération (14) pour les freins et/ou pour commander un régulateur (15) pour un couple moteur.

22. Dispositif selon la revendication 21, **caractérisé en ce que** le régulateur de décélération (14) est un régulateur pour un ou plusieurs freins, de préférence tous les freins du véhicule tracteur et du véhicule remorque.
